# EUROPÄISCHE PATENTSCHRIFT

(11) **EP 0 628 182 B1**
(45) Veröffentlichungstag und Bekanntmachung des Hinweises auf die Patenterteilung: **17.04.1996**
(21) Anmeldenummer: 93904019.2
(22) Anmeldetag: 25.02.1993
(51) Int. Cl.: G05B 19/05, G05B 19/042

(54) **VERFAHREN ZUR KONTROLLE UND STEUERUNG VON CHARGENPROZESSEN**
PROCESS FOR THE MONITORING AND CONTROL OF CHARGING PROCESSES
PROCEDE POUR CONTROLER ET COMMANDER DES PROCESSUS DE CHARGE

(30) Priorität: 27.02.1992 DE 4206076
(43) Veröffentlichungstag der Anmeldung: 14.12.1994
(73) Patentinhaber: WACKER-CHEMIE GMBH, D-81737 München (DE)
(72) Erfinder: SELIG, Manfred, D-50765 Köln (DE); KRUMMEN, Helmut, D-52445 Titz/gevelsdorf (DE); SCHMITZ, Anton, D-41542 Dormagen (DE)
(86) Internationale Anmeldenummer: EP9300441
(87) Internationale Veröffentlichungsnummer: WO9317374

(56) Entgegenhaltungen:
- AUTOMATISIERUNGSTECHNISCHE PRAXIS Juni 1988, Seiten 292 - 299 TH. M]LLER- HEINZERLING 'Flexible Standardsoftware zur Automatisierung von Chargenprozessen mit dem Prozessleitsystem TELEPERM M' in der Anmeldung erwähnt siehe Seite 296,Absatz 4.A
- ELEKTROTECHNIK Bd. 73, Nr. 1/2, 15. Februar 1991, WURZBURG, DE Seiten 24 - 26 'Flexibles Prozessleitsystem'

## Beschreibung

Die Erfindung betrifft ein Verfahren zur Kontrolle und Steuerung von Chargenprozessen, welche mehrere Prozeßschritte beinhalten, die in einem rezeptspezifischen zeitlichen Abstand nacheinander ablaufen und deren Anfangszustände durch einen Satz von spezifischen Parametern charakterisiert sind, wobei die Chargenprozesse mittels einer automatischen Prozeßsteuerung gesteuert werden.

Chargenprozesse sind Verfahren, bei denen nach einer vorgegebenen Vorschrift das gewünschte Produkt in einer zeitsequentiellen Folge von verfahrenstechnischen Teilaufgaben herge-stellt wird. Der Ablauf solcher Prozesse kann mittels einer automatischen Prozeßsteuerung gesteuert werden. Derartige automatische Prozeßsteuerungen bestehen aus zwei Grundblöcken, der Hardware und der Software.

Die Hardware-Komponenten umfassen eine oder mehrere Zentralrechnereinheiten mit internen bzw. externen Speichereinheiten sowie Ein- und Ausgabe-Einheiten, beispielsweise analoge bzw. binäre Ein- und Ausgabekarten zur Kommunikation mit den zu steuernden Anlagen; Tastatur, Maus oder Lichtgriffel zur Bedienung der Prozeßsteuerung und Bildschirm oder Drucker zur Beobachtung der Prozeßsteuerung.

Die Software beinhaltet die Rezepturprogramme und/oder allgemeine Verriegelungs- und/oder Ablaufprogramme und die prozeßnahen Software-Komponenten. Die Rezepturprogramme sind die Verfahrensvorschriften mit den Grundoperationen und deren Ablauforganisation zur Herstellung eines Produkts im zu steuernden Chargenprozeß. Üblicherweise sind solche Rezepturprogramme in Teilrezepturen strukturiert, die die parallele oder sequentielle Durchführung von Teilaufgaben in verschiedenen Prozeßeinheiten steuern.

Die Elementarbausteine der Rezepturprogramme oder Teilrezepturen sind die Phasen. Die Phasen-Programme sind strukturiert in den Steuerteil (Ablaufteil), den Parameterteil und den Kommunikationsteil. Der Steuerteil enthält die Programmelemente für die Schrittfolge der Grundoperationen des Prozesses mit den Angaben der Anfangsbedingungen, der Verfahrensschritte und ihrer Verknüpfung, der Endbedingungen und die Schrittfolge bei Störungen. Der Parameterteil zur Steuerung eines chemischen Prozesses kann etwa die Einsatzstoffe und deren Menge, die Normalzeit für einen Prozeßschritt, die Prozeßvariablen (Soll- und Grenzwerte für Temperatur, Druck etc.) und die zulässigen Bedienungseingriffe umfassen. Der Kommunikationsteil beinhaltet die Programmbestandteile für den Datenaustausch zwischen den Phasen und dem Datenaustausch mit dem Bediener zur Meldung von Störungen oder des aktuellen Zustandes des Prozesses. Weiter beinhaltet der Kommunikationsteil die Programmelemente zur Ansteuerung der prozeßnahen Software der Einzelsteuerebene, das heißt der Einzelsteuerbausteine, welche beispielsweise die Ansteuerung der Regler, Ventile oder Motoren der Prozeßanlage bewerkstelligen.

Bei der prozeßnahen Software, den Bausteinen zur Einzelansteuerung, handelt es sich um Programme, die von den Ablaufprogrammen (Rezeptur) angesteuert werden und deren Befehle zur Steuerung von einem oder mehreren Operanden (Aktoren), beispielsweise Regler, Ventile, Motoren, umsetzen.

Für den Stand der Technik repräsentative Systeme zur automatischen Prozeßsteuerung werden von K.H. Horst in Automatisierungstechnische Praxis 31 (1989), Seite 2, R. Oldenbourg Verlag und von Th. Müller-Heinzerling in Automatisierungstechnische Praxis 6 (1988), Seite 292, R. Oldenbourg Verlag beschrieben.

Solche Prozeßsteuerungssysteme arbeiten üblicherweise in der Form von Schrittschaltwerken. Mit Beginn des Chargenprozesses wird ein starrer Zeittakt vorgegeben, wobei die einzelnen Phasenprogramme an einem definierten Punkt, z.B. dem Ende einer anderen Phase, nacheinander gestartet werden. Zwischen den ablaufenden Phasenprogrammen sind üblicherweise zum Beginn bzw. zum Ende einer Phase Koordinierungen möglich: Falls sich die Betriebszustände, die Voraussetzung für den Start der nächsten Phase sind, in der vorgegebenen Zeit nicht eingestellt haben, wird der Zeittakt unterbrochen bis die jeweiligen physikalischen und chemischen Randbedingungen eingestellt sind.

Speziell in komplexeren Chargenprozessen, in denen stark exotherme chemische Reaktionen ablaufen, genügen diese Koordinierungen jedoch in vielen Fällen nicht. Denn beispielsweise durch Rohstoffeinflüsse kann es leicht zu Änderungen und Verzögerungen im Ablauf des Chargenprozesses kommen, die ein starres Schrittschaltwerk sehr rasch überfordern. Die Auswirkungen auf die Produktqualität und Betriebssicherheit können dabei immens sein. Eine sichere Beherrschung von solchen Unplanmäßigkeiten ist jedoch eine zwingende Voraussetzung, sowohl für einen störungsfreien Betrieb, als auch für eine gleichmäßige Produktqualität.

Da aus den eben genannten Gründen sowie aufgrund von unvermeidlichen statistischen Schwankungen im Reaktionsablauf und erst recht durch schleichende Änderung der Reaktionsbedingungen (z.B. zunehmende Verschmutzung) ein starres Zeitsystem, wie es von Schrittschaltwerken vorgegeben wird, innerhalb kürzester Zeit unüberschaubar ist, werden die an sich sehr charakteristischen Zeitabstände zwischen charakteristischen Ereignissen eines Verfahrens bisher nicht zur Prozeßkontrolle genutzt.

Es bestand daher die Aufgabe, ein Verfahren zur Kontrolle und Steuerung von Chargenprozessen, welche mittels einer automatischen Prozeßsteuerung gesteuert werden, zu entwickeln, wobei die genannten Abweichungen vom regulären Prozeßablauf automatisch erkannt werden sollten und trotz der Abweichungen die ständige Koordination der Teilprozesse und deren sequentieller Ablauf gewährleistet werden sollte.

Gegenstand der Erfindung ist ein Verfahren zur Kontrolle und Steuerung von Chargenprozessen, welche mehrere Prozeßschritte beinhalten, die in einem rezeptspezifischen zeitlichen Abstand nacheinander ablaufen und deren Anfangszustände durch einen Satz von spezifischen Parametern charakterisiert sind, wobei die Chargenprozesse mittels einer automatischen Prozeßsteuerung gesteuert werden,
dadurch gekennzeichnet, daß in das Prozeßsteuerungssystem eine Phase (Zeitplanbaustein) integriert wird, welches
a) die prozeßspezifischen Ereignisse in Form deren Parameterkonstellation,
b) die zeitliche Abfolge der prozeßspezifischen Ereignisse,
c) die prozeßspezifischen exakten Zeitabstände zwischen den Ereignissen enthält,
wobei die Phase (Zeitplanbaustein)
1) mit dem Start des Rezepturprogramms oder nach dem Erkennen eines prozeßspezifischen Ereignisses jeweils eine neue, relative Zeitachse startet,
2) durch Integration in den Parametersatz der Phasen des Rezepturprogramms, die Prozeßschritte zum Erreichen des jeweils nächsten prozeßspezifischen Folgeereignisses initiiert,
3) nach Ablauf des prozeßspezifischen Zeitabstands zum Folgeereignis, die spezifische Parameterkonstellation für den Start des Folgeereignisses mit der aktuellen Parameterkonstellation im Prozeß vergleicht und
4) bei Übereinstimmung der Parameterkonstellationen die Prozeßschritte zum Erreichen des jeweils nächsten Folgeereignisses initiiert.

Als Grundbaustein für die automatische Prozeßsteuerung können die im Stand der Technik beschriebenen Software-Pakete eingesetzt werden. Zur Durchführung des erfigungsgemäßen Verfahrens werden diese Software-Pakete mit der erfindungsgemäßen prozeßspezifischen Phase (Zeitplanbaustein) ergänzt.

Der Zeitplanbaustein enthält die prozeßspezifischen Ereignisse in Form deren Parameterkonstellation. Als Ereignis bezeichnet man dabei die für einen Prozeß in einer bestimmten Phase charakteristische Parameterkonstellation; das sind üblicherweise die Anfangsbedingungen für den Start des Chargenprozesses oder die Endbedingungen, die sich nach Durchführung eines einzelnen Verfahrensschrittes des Prozesses wie Aufheizen und/oder Dosieren einstellen.

Weiter enthält der Zeitplanbaustein die feste zeitliche Abfolge der prozeßspezifischen Ereignisse, das heißt welches Ereignis in dem zu steuernden Prozeß dem vorangegangenen nachfolgt.

Wesentlich für das erfindungsgemäße Verfahren zur Kontrolle des zeitlichen Ablaufs von Chargenprozessen ist die Aufnahme der prozeßspezifischen, exakt definierten Zeitabstände zwischen den prozeßspezifischen Ereignissen. In einer bevorzugten Ausführungsform werden bezüglich des Zeitabstands um jedes Ereignis "Fenster" definiert, die bestimmte, für den Prozeßverlauf unschädliche, erlaubte Abweichungstoleranzen von den exakten Zeitabständen für das Eintreten eines Ereignisses zulassen. Die Größenordnung der tolerierbaren Zeitabweichungen kann dabei vom Bediener einprogrammiert werden. Außerdem können diese Zeitabweichungen vom Prozeßsteuerungssystem selbst festgelegt werden, z.B. anhand einer statistischen Auswertung der realen Streuungen der Zeitabstände.

In einer besonders bevorzugten Ausführungsform des Verfahrens werden die vom Prozeßsteuerungssystem ermittelten Zeitabstände und deren Streuungen an die Bedien-/Beobachtungs-Einrichtung der Prozeßsteuerung und/oder an eine Ausgabeeinrichtung, beispielsweise einen Drucker, gemeldet und können so zur Kontrolle und Überwachung der Prozeßkonstanz und damit der Produktqualität benutzt werden.

Bei der Durchführung des erfindungsgemäßen Verfahrens wird mit dem Start des Rezepturprogramms der Zeittakt gestartet und die abgelaufene Zeit mit dem im Zeitplanbaustein abgespeicherten Zeitabstand bis zum nächsten prozeßspezifischen Ereignis verglichen. Simultan dazu wird die spezifische Parameterkonstellation für dieses Folgeereignis mit der aktuellen Parameterkonstellation im Prozeß verglichen. Wird innerhalb des im Zeitplanbaustein abgespeicherten Zeitabstands oder, bei Nichteinhaltung des abgespeicherten Zeitabstands, innerhalb des im Zeitplanbaustein abgespeicherten Toleranzbereiches, eine Übereinstimmung zwischen der Parameterkonstellation im Prozeß und der im Zeitplanbaustein abgespeicherten Parameterkonstellation für das Folgeereignis festgestellt, wird der nächste Prozeßschritt initiiert.

Kommt es innerhalb des im Zeitplanbaustein vorgegebenen Zeitabstands, inklusive Toleranzbereich, nicht zur Übereinstimmung zwischen der im Zeitplanbaustein abgespeicherten Parameterkonstellation und der Parameterkonstellation in dem zu steuernden Chargenprozeß, wird diese Abweichung vom regulären Prozeßverlauf an das Bedien-/Beobachtungs-System gemeldet und es besteht die Möglichkeit des manuellen Eingreifens in die Prozeßführung. Ebenso sind automatisierte Korrekturen denkbar, z.B. wenn der Reaktionsbeginn nicht im Fenster erreicht wird, die Katalysatorrate zu erhöhen.

Bei Übereinstimmung der Parameterkonstellationen im Prozeß mit denen des Zeitplanbausteins, das heißt bei Eintritt eines charakteristischen Ereignisses im Prozeßverlauf, werden zur Initiierung des jeweils nächsten Prozeßschrittes vom Zeitplanbaustein die entsprechenden Funktionen der Automatikprogramme des Prozeßsteuerungssystems aktiviert und ein neuer Zeittakt gestartet. Die im Prozeß ablaufende Zeit wird erneut mit dem im Zeitplanbaustein abgespeicherten Zeitabstand bis zum nächsten charakteristischen Ereignis verglichen. Die charakteristischen Parameter dieses Prozeßschrittes werden mit den im Zeitplanbaustein abgespeicherten verglichen und bei Erkennen des charakteristischen Prozeßereignisses innerhalb des charakteristischen Zeitabstands wiederum der nächste Prozeßschritt initiiert.

Mit dem erfindungsgemäßen Verfahren werden folglich mit dem Eintritt eines jeden charakteristischen Ereignisses jeweils eine eigene relative Zeitachse gestartet, wobei auf diese charakteristischen Ereignisse beliebige Folgeereignisse und/oder Folgehandlungen bezogen werden können. Damit kann jedes Ereignis und jede Handlung im Chargenprozeß eindeutig festgelegt werden:
Durch einen Bezugszeitpunkt bzw. eine Bezugshandlung, den eines der obengenannten charakteristischen Ereignisse darstellt.
Durch einen charakteristischen, rezeptspezifischen Zeitabstand zu diesem charakteristischen Ereignis.

Die Vorteile des neuen Verfahrens liegen darin, daß Verzögerungen oder unerwartete Beschleunigungen im Prozeßverlauf automatisch erkannt werden, wobei durch entsprechende rezepturabhängige Vorrichtungen im Steuerprogramm der Software auf solche Abweichungen reagiert werden kann und damit die erforderliche ständige Koordination der Teilprozesse gewährleistet wird. Durch das erfindungsgemäße Verfahren wird das starre Zeitsystem von Schrittschaltwerken in ein System relativer Zeitachsen aufgelöst. Damit kann das Auslösen von Folgehandlungen, beispielsweise das Starten von Dosierungen, durch den Zeitabstand zu einem Bezugsereignis festgelegt werden. Wenn dieses Bezugsereignis nun nah genug zur Folgehandlung gewählt wird, bleiben, im Gegensatz zu den Verfahren nach dem Stand der Technik, alle Störungen die vor dem Bezugsereignis eingetreten sind, ohne jede Auswirkung auf das System Bezugsereignis/Folgeereignis (beispielsweise Reaktionsbeginn/Dosierbeginn des Monomeren). Dies ist für die Stabilität des Gesamtsystems beim Auftreten von Unregelmäßigkeiten von fundamentalem Nutzen. Durch die Beschreibung von Standardprozessen mit einem Satz von charakteristischen, chargenspezifischen Zeitbedarfs-Parametern wird die Herstellung des entsprechenden Produkts einer stark verbesserten statistischen Prozeßkontrolle unterworfen.

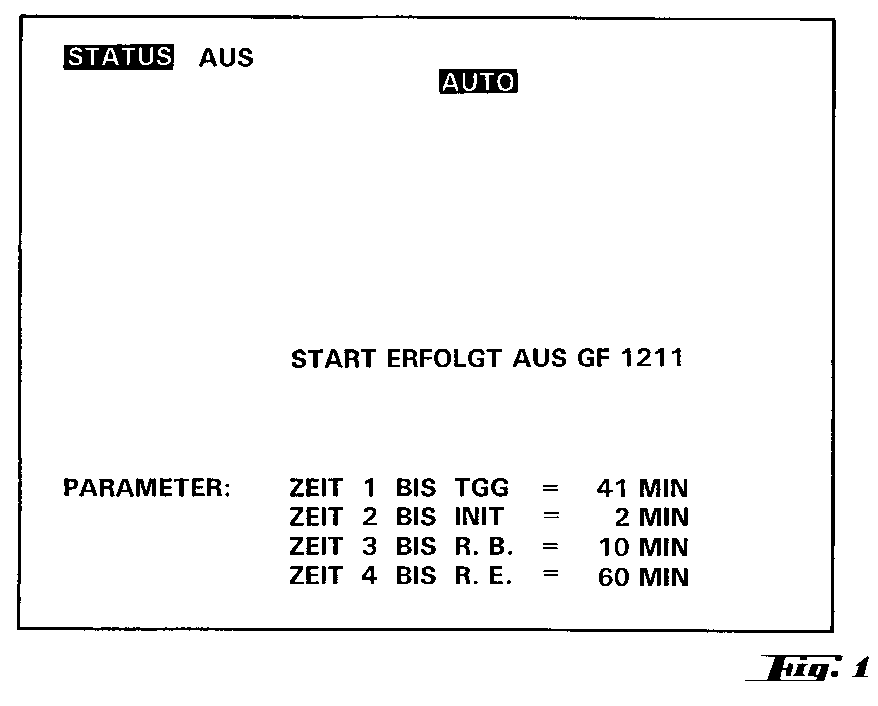

Das erfindungsgemäße Verfahren wird im folgenden am Beispiel eines technischen Polymerisationsverfahrens erläutert. In den Abbildungen Figur 1 bis Figur 6 sind die einzelnen Phasen des Verfahrens illustriert, wie sie sich dem Bediener/Beobachter am Bildschirm der Meßwarte darstellen.

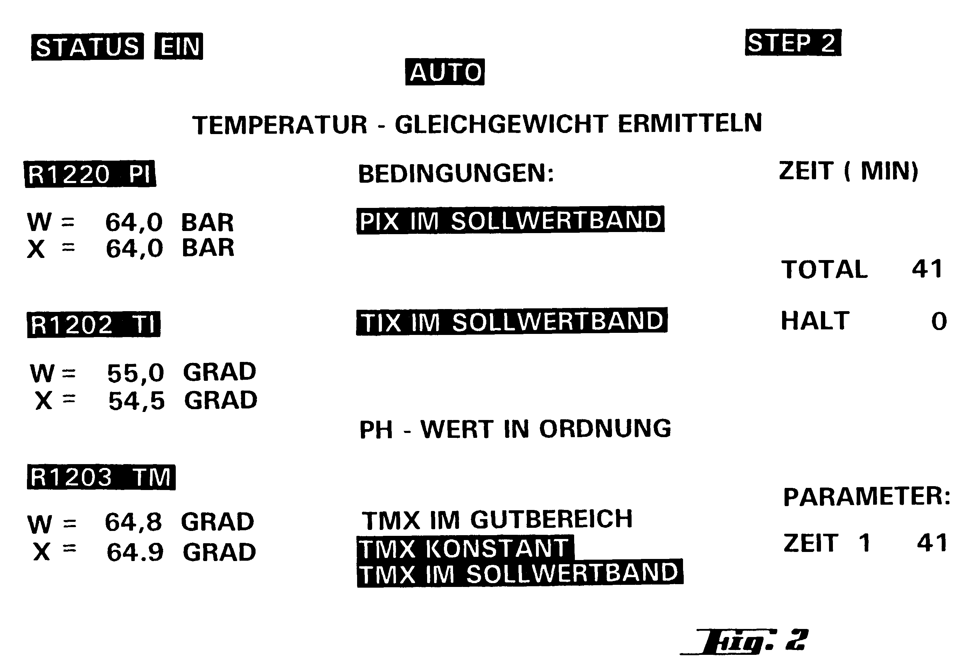

Erster Verfahrensschritt ist der Start der Charge, wobei, wie in Figur 1 zu sehen, der in das Prozeßsteuerungssystem integrierte Zeitplanbaustein, auf das Automatikprogramm Grundfunktion GF 1211 zugreift, mit dem die Rohstoffe in den Reaktor eindosiert werden. Weiter sind in Figur 1 die im Zeitplanbaustein für diese Charge abgespeicherten charakteristischen Zeitabstände zwischen den charakteristischen Ereignissen dieses Chargenprozesses aufgeführt:
- Zeit 1 =: Zeit vom Start t₀ bis zur Einstellung des Temperaturgleichgewichts
- Zeit 2 =: Zeitabstand zwischen der Einstellung des Temperaturgleichgewichts und dem Beginn der Initiatordosierung
- Zeit 3 =: Zeitabstand zwischen Beginn der Initiatordosierung und dem Reaktionsbeginn
- Zeit 4 =: Zeitabstand zwischen Ende der Monomerdosierung (DEM) und Reaktionsende
Der Startzeitpunkt t₀ ist der erste Bezugszeitpunkt und wird vom Zeitplanbaustein selbständig mit dem Beginn der Vorlage gestartet. Simultan dazu greift der Zeitplanbaustein auf die Bausteine des Prozeßsteuerungssystems zu und ermittelt die Parameter, die zur Einstellung der charakteristischen Parameterkonstellation für das nächste Bezugsereignis erforderlich sind (Figur 2: Innendruckregler, Innentemperaturregler, Manteltemperaturregler). Durch Vergleich der aktuellen Parameterkonstellationen im Prozeß mit den für das nächste charakteristische Ereignis im Zeitplanbaustein abgespeicherten, wird vom Zeitplanbaustein der nächste Bezugszeitpunkt, das Temperaturgleichgewicht, gesucht.

Figur 2 zeigt die Rückmeldung vom Zeitplanbaustein an die Meßwarte bei Erreichen des Temperaturgleichgewichts im Chargenprozeß:
Rechts ist die Zeit angegeben die seit t₀ abgelaufen ist - Totalzeit 41 Minuten - und die im Zeitplanbaustein vorgegebene Zeit für das erste Zeitintervall - Zeit 1 = 41 Minuten.

Links ist die für das Ereignis "Temperaturgleichgewicht" charakteristische Parameterkonstellation mit den SOLL-Werten W angegeben. Zum Vergleich werden auch die IST-Werte X angegeben.
Die charakteristischen Parameter für dieses Ereignis sind: Der mit der Reglerfunktion R1220 eingestellte Reaktorinnendruck PI, die mit der Reglerfunktion R1202 eingestellte Reaktorinnentemperatur TI und die mit der Reglerfunktion R1203 eingestellte Manteltemperatur TM.
Sind die Werte der charakteristischen Parameterkonstellation wie im vorliegenden Fall im Toleranzbereich, wird dies in der Meßwarte unter dem Feld "Bedingungen" gemeldet.

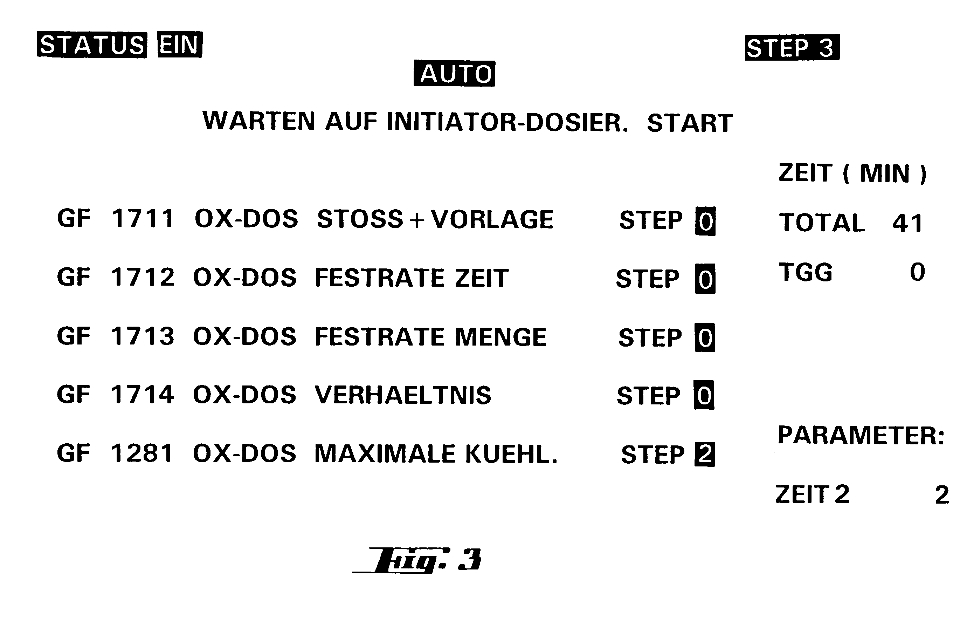

Das nächste charakteristische Ereignis ist der Start der Initiatordosierung (Figur 3), der im vorgegebenen Zeitabstand von Zeit 2 = 2 Minuten zu erfolgen hat. Durch Zugriff auf die Automatikprogramme GF1711, GF1712, GF1713, GF1714 oder GF1281, die verschiedene Möglichkeiten der Dosierung ermöglichen, startet der Zeitplanbaustein die Dosierung. Im vorliegenden Fall aus der Grundfunktion GF1281 (STEP 2 bedeutet aktiv), welche nach einer Totalzeit von 41 Minuten, das heißt unmittelbar nach Einstellung des Temperaturgleichgewichts TGG angesteuert wird.

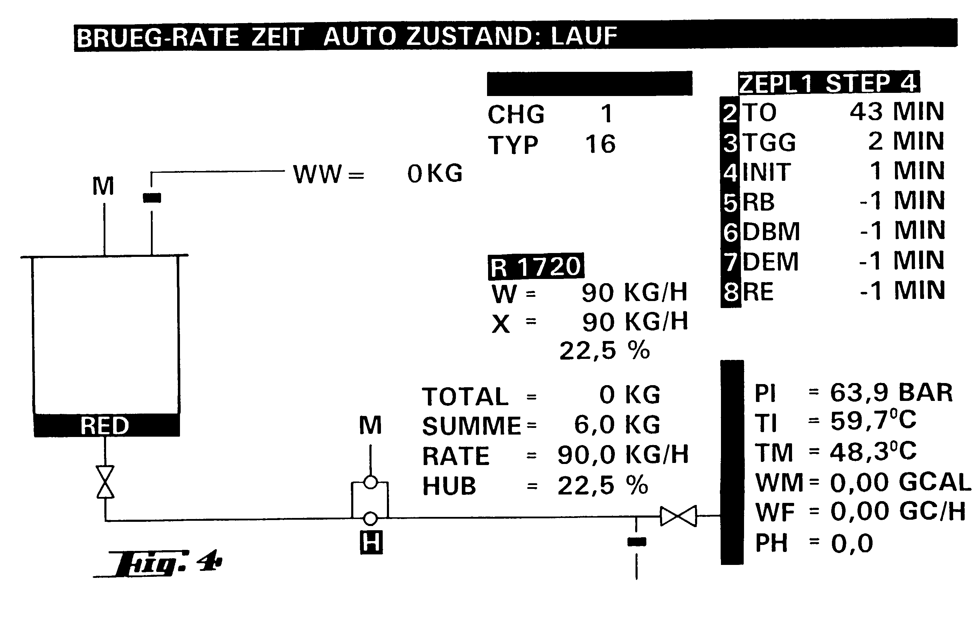

Figur 4 zeigt den Prozeßzustand 43 Minuten nach Start der Charge:
Der Code für den Chargentyp wird angegeben (CHG 1, TYP 16). Die aktuellen Zeitzustände für die charakteristischen Prozeßereignisse werden von dem Zeitplanbaustein an die Meßwarte übermittelt und angezeigt (ZEPL1 STEP 4). Seit dem Start der Charge zum Zeitpunkt t0 sind 43 Minuten vergangen. Das Temperaturgleichgewicht wurde vor 2 Minuten erreicht. Die Initiatordosierung läuft seit 1 Minute und damit 1 Minute früher als im Zeitplanbaustein für diese Charge vorgesehen. Da keine Fehlfunktion angezeigt wird, liegt diese Zeitabweichung innerhalb des im Zeitplanbaustein vorgesehenen Toleranzbereiches. Durch die Anzeige von "-1 MIN" wird gemeldet, daß die Prozeßereignisse Reaktionsbeginn (RB), Dosierbeginn Monomer (DBM), Dosierende Monomer (DEM) sowie Reaktionsende (RE) noch nicht eingetreten sind. Der Eintritt dieser Ereignisse würde durch Umschalten der entsprechenden Anzeige auf "0" angezeigt werden.
Die charakteristischen Parameter für Innendruck PI, Innentemperatur TI und Manteltemperatur TM werden rechts unten angezeigt. Wärmemessung WM, Wärmefluß WF und pH-Bestimmung PH sind noch nicht aktiviert.
Die Initiatordosierung wird mit der Reglerfunktion R1720 des Prozeßsteuerungssystems eingestellt, welche aus der vom Zeitplanbaustein aktivierten Grundfunktion GF1281 angesteuert wurde. Der SOLL-Wert W der Dosiermenge entspricht dem IST-Wert X von 90 kg/h. Dies wird mit einem Pumpenhub von 22.5 % des Maximalhubs erreicht. Die bis dato eindosierte Menge beträgt 6.0 kg.

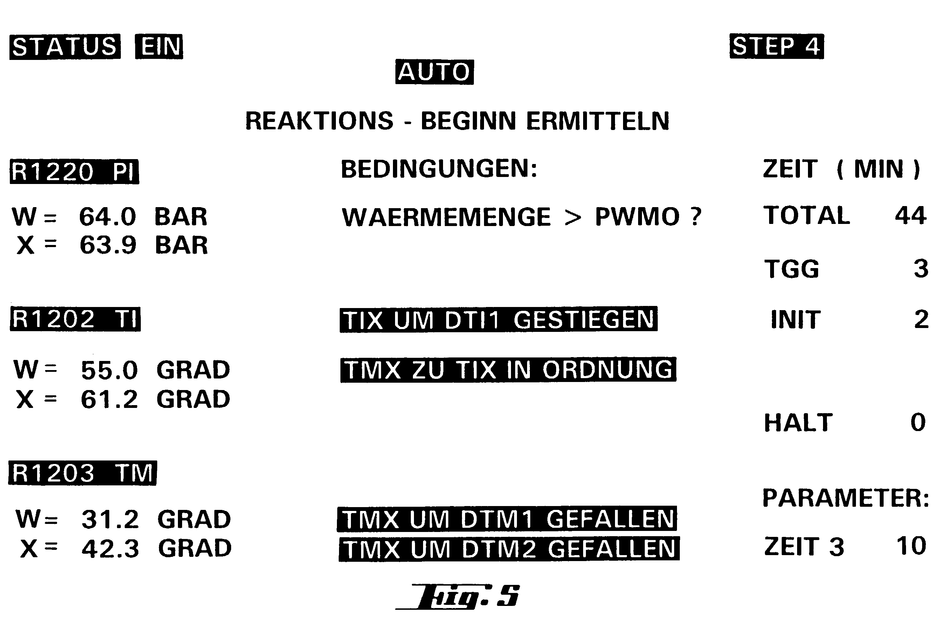

Nach Beginn der Initiatordosierung wird vom Zeitplanbaustein das nächste charakteristische Bezugsereignis "Reaktionsbeginn" gesucht (Figur 5). Der dafür charakteristische Zeitabstand ist mit 10 Minuten im Zeitplanbaustein, zusammen mit der charakteristischen Parameterkonstellation abgespeichert. Durch die erfindungsgemäße Vorgehensweise der Integrierung eines Zeitplanbausteins in das Prozeßsteuerungssystem, bleibt die bis dato aufgetretene Abweichung vom Idealverlauf des Prozesses, Initiatordosierung eine Minute zu früh, für den weiteren Prozeßablauf irrelevant, da für die weiteren Folgeereignisse, wie hier dem Reaktionsbeginn, jeweils neue Zeitachsen definiert werden.

Durch Vergleich der aktuellen Parameterkonstellationen im Prozeß mit den für das nächste charakteristische Ereignis im Zeitplanbaustein abgespeicherten, wird vom Zeitplanbaustein der nächste Bezugszeitpunkt, der Reaktionsbeginn, gesucht. Der Reaktionsbeginn ist dadurch charakterisiert, daß der Innendruck im Reaktor PI dem SOLL-Wert W entspricht bzw. der IST-Wert X innerhalb eines vorgegeben Toleranzbereiches liegt. Die gleichen Bedingungen gelten für die Innentemperatur im Reaktor TI und die Manteltemperatur des Reaktors TM. Die entsprechenden Werte sind zusammen mit den zugehörigen Reglerfunktionen des Prozeßsteuerungssystem in Figur 5 angezeigt.

Weitere Bedingungen, die vom Zeitplanbaustein abgefragt werden sind, daß die Innentemperatur bei Reaktionsbeginn TIX im Vergleich zur Innentemperatur zum Zeitpunkt des Temperatur-Gleichgewichts um einen Differenzbetrag DTI gestiegen ist, daß die Manteltemperatur bei Reaktionsbeginn TMX im Vergleich zur Manteltemperatur zum Zeitpunkt des Temperatur-Gleichgewichts um einen Differenzbetrag DTM gefallen ist und daß TMX zu TIX in einem definierten Verhältnis steht. Im vorliegenden Prozeß wird das charakteristische Ereignis Reaktionsbeginn bereits 2 Minuten nach Beginn der Initiatordosierung erkannt, also weit vor Ablauf des Zeitintervalls ZEIT 3 von 10 Minuten. Würde diese Zeitdifferenz außerhalb des im Zeitplanbaustein definierten Fensters liegen, wäre in Figur 5 eine entsprechende Meldezeile zu sehen. Dies ist offensichtlich nicht der Fall.

Nachdem der Reaktionsbeginn eingetreten ist, wird nach den darauf folgenden charakteristischen Prozeßereignissen gesucht. Die Ereignisse Dosierbeginn der Monomeren (DBM) und Dosierende (DEM) werden hier nicht näher erläutert, da die dabei ablaufenden Verfahrensschritte analog den bisher erläuterten sind.

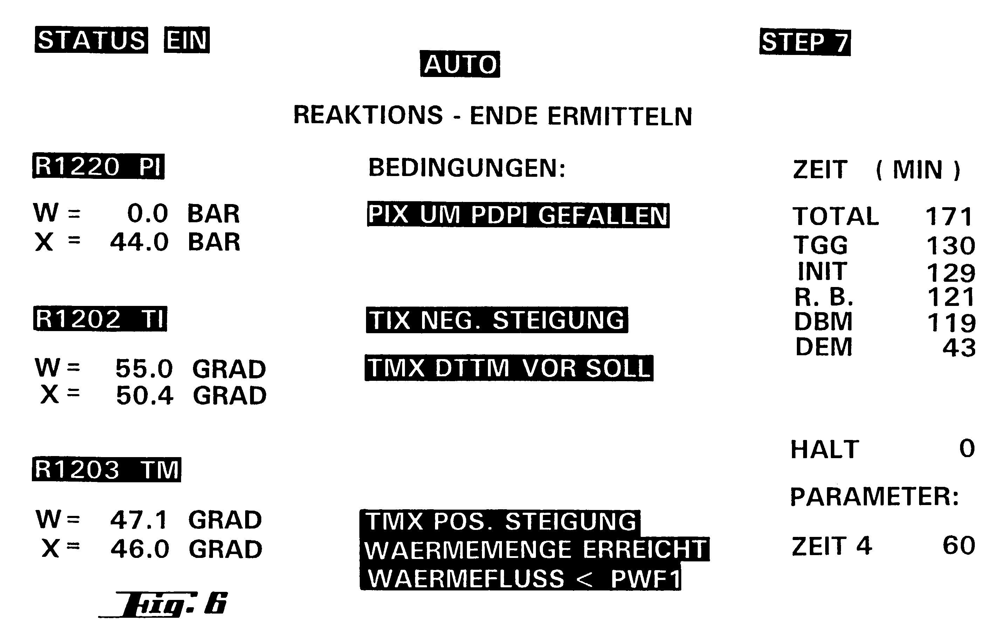

Figur 6 zeigt wie vom Zeitplanbaustein das Reaktionsende gesucht und erkannt wird. Die dafür relevanten Parameterkonstellationen sind in Figur 6 unter dem Feld Bedingungen aufgelistet und werden vom Zeitplanbaustein, durch Vergleich der abgespeicherten Parameterkonstellationen mit den aktuellen Parametern im Prozeß, überwacht. Der charakteristische Zeitabstand zwischen Ende der Monomerdosierung DEM und Reaktionsende ist ZEIT 4 = 60 Minuten. Es wird 43 Minuten nach DEM erkannt, aber im Vergleich zum Standardzeitsystem und dem darin vorgesehenen Toleranzbereich (Fenster) um einige Minuten zu früh. In einem solchen Fall schaltet das Automationssystem nicht automatisch weiter, sondern macht den Bediener auf die Sondersituation durch eine, hier nicht gezeigte, Meldezeile aufmerksam. Der Bediener entscheidet dann darüber, ob es sich hier um ein "echtes" oder nur um ein falsch zu früh erkanntes Reaktionsende handelt. Durch Quittieren wird der Zeitpunkt als "echt" akzeptiert. Im anderen Fall sucht das System weiterhin nach dem Reaktionsende.

Während die statistische Auswertung der für einen mehrstufigen Chargenprozeß benötigten Gesamtzeit nur mit erheblichem Aufwand durchführbar ist, weil eine Störung bei einem Teilschritt, wie zum Beispiel Initiatordosierung oder Reaktionsbeginn, auf die Gesamtzeit aller Folgeereignisse durchschlägt, erlaubt die Auswertung der Zeitdifferenzen hochsignifikante Aussagen über die ungestörten Prozeßteilabschnitte. Die Verzögerungen lassen sich automatisch und statistisch exakt dem jeweiligen Prozeßabschnitt zuordnen.

## Patentansprüche

1. Verfahren zur Kontrolle und Steuerung von Chargenprozessen, welche mehrere Prozeßschritte beinhalten, die in einem rezeptspezifischen zeitlichen Abstand nacheinander ablaufen und deren Anfangs zustände durch einen Satz von spezifischen Parametern charakterisiert sind, wobei die Chargenprozesse mittels einer automatischen Prozeßsteuerung gesteuert werden,
dadurch gekennzeichnet, daß in das Prozeßsteuerungssystem eine Phase (Zeitplanbaustein) integriert wird, welches
a) die prozeßspezifischen Ereignisse in Form deren Parameterkonstellation,
b) die zeitliche Abfolge der prozeßspezifischen Ereignisse,
c) die prozeßspezifischen exakten Zeitabstände zwischen den Ereignissen enthält,
wobei die Phase (Zeitplanbaustein)
1) mit dem Start des Rezepturprogramms oder nach dem Erkennen eines prozeßspezifischen Ereignisses jeweils eine neue, relative Zeitachse startet,
2) durch Integration in den Parametersatz der Phasen des Rezepturprogramms, die Prozeßschritte zum Erreichen des jeweils nächsten prozeßspezifischen Folgeereignisses initiiert,
3) nach Ablauf des prozeßspezifischen Zeitabstands zum Folgeereignis, die spezifische Parameterkonstellation für den Start des Folgeereignisses mit der aktuellen Parameterkonstellation im Prozeß vergleicht und
4) bei Übereinstimmung der Parameterkonstellationen die Prozeßschritte zum Erreichen des jeweils nächsten Folgeereignisses initiiert.

2. Verfahren nach Anspruch 1, dadurch gekennzeichnet, daß für die prozeßspezifischen, exakten Zeitabstände erlaubte Abweichungstoleranzen von den exakten Zeitabständen definiert werden, innerhalb derer das charakteristische Folgeereignis eintreten kann.

3. Verfahren nach Anspruch 1 oder 2, dadurch gekennzeichnet, daß die Größenordnung der tolerierbaren Zeitabweichungen vom Bediener einprogrammiert wird oder vom Prozeßsteuerungssystem selbst festgelegt wird, anhand einer statistischen Auswertung der realen Streuungen der Zeitabstände.

4. Verfahren nach Anspruch 1, 2 oder 3, dadurch gekennzeichnet, daß die vom Prozeßsteuerungssystem ermittelten Zeitabstände und deren Streuungen an die Bedien-/ Beobachtungs-Einrichtung der Prozeßsteuerung und/oder an eine Ausgabeeinrichtung, gemeldet werden und so zur Kontrolle und Überwachung der Prozeßkonstanz und damit der Produktqualität benutzt werden.

5. Verfahren nach Anspruch 1, 2, 3 oder 4, dadurch gekennzeichnet, daß bei Abweichungen vom vorgegebenen Prozeßverlauf in dem zu steuernden Chargenprozeß, diese Abweichungen vom regulären Prozeßverlauf an das Bedien-/Beobachtungs-System gemeldet werden und die Möglichkeit des manuellen Eingreifens in die Prozeßführung durch das Bedienungspersonal besteht.

## Claims

1. Method for the monitoring and control of batch processes which contain a plurality of process steps which take place successively with a formulation-specific time interval and whose initial states are characterized by a set of specific parameters, the batch processes being controlled by means of an automatic process control, characterized in that a phase (time-program module) is integrated into the process-control system, which phase contains
a) the process-specific events in the form of their parameter constellation,
b) the time sequence of the process-specific events,
c) the precise process-specific time intervals between the events,
the phase (time-program module)
1) with the start of the formulation program or after the recognition of a process-specific event, starting a new, relative time axis in each case,
2) by integration of the phases of the formulation program into the parameter set, initiating the process steps to achieve the particular next process-specific successive event,
3) after expiry of the process-specific time interval until the successive event, comparing the specific parameter constellation for the start of the successive event with the current parameter constellation in the process and
4) in the case of agreement of the parameter constellations, initiating the process steps to achieve the particular next successive event.

2. Method according to Claim 1, characterized in that deviation tolerances, permitted for the precise process-specific time intervals, from the precise time intervals are defined, within which deviation tolerances the characteristic successive event can occur.

3. Method according to Claim 1 or 2, characterized in that the order of magnitude of the tolerable time deviations is programmed in by the operator or is ascertained by the process-control system itself using a statistical evaluation of the actual scatters of the time intervals.

4. Method according to Claim 1, 2 or 3, characterized in that the time intervals determined by the process-control system and the scatters thereof are signalled to the operating/monitoring device of the process control and/or to an output device and are thus used for the monitoring and surveillance of the process constancy and thus of the product quality.

5. Method according to Claim 1, 2, 3 or 4, characterized in that, in the case of deviations from the specified process flow in the batch process to be controlled, these deviations from the regular process flow are signalled to the operating/monitoring system and there is the possibility of manual intervention in the process control by the operating personnel.

## Revendications

1. Procédés pour contrôler et commander des processus de charges, lesquels couvrent plusieurs étapes de processus qui se succèdent dans un intervalle de temps spécifique du protocole et dont les états initiaux sont caractérisés par une série de paramètres spécifiques, où le processus de charge est commandé au moyen d'une commande automatique du processus,
caractérisés en ce qu'une phase (élément temporel) est intégrée dans le système de commande du processus, laquelle contient
a) les phénomènes spécifiques du processus sous forme d'ensemble de paramètres,
b) la succession temporelle des phénomènes spécifiques du processus,
c) les délais exacts spécifiques du processus entre les phénomènes,
où la phase (élément temporel)
1) commence chaque fois un nouvel axe de temps relatif avec le début du programme du protocole ou après la reconnaissance d'un phénomène spécifique du processus,
2) initie l'étape du processus pour atteindre le phénomène suivant spécifique du processus, chaque fois le plus voisin, par intégration de la série des paramètres de la phase du programme du protocole,
3) après évolution des intervalles spécifiques du processus vers le phénomène suivant, compare l'ensemble spécifique des paramètres pour le début du phénomène suivant avec l'ensemble actuel des paramètres dans le procédé et
4) par concordance des ensembles des paramètres, initie l'étape du processus pour atteindre le phénomène suivant chaque fois le plus voisin.

2. Procédés suivant la revendication 1, caractérisés en ce que les tolérances d'écarts permises pour les délais exacts spécifiques du processus sont définies à partir des délais exacts, dans les limites desquels, le phénomène suivant caractéristique peut commencer.

3. Procédés suivant la revendication 1 ou 2, caractérisés en ce que l'ordre de grandeur de l'écart temporel tolérable est programmé par l'utilisateur ou est auto-déterminé par le système de commande du processus, au moyen d'un calcul statistique des commandes effectives des délais.

4. Procédés suivant la revendication 1, 2 ou 3, caractérisés en ce que les délais établis par le système de contrôle du processus et leurs commandes sont signalés au dispositif d'utilisation/observation et ainsi, sont utilisés au contrôle et à la surveillance des constantes du processus et ainsi, de la qualité du produit.

5. Procédés suivant la revendication 1, 2, 3 ou 4, caractérisés en ce que, lors de divergences du cours prédéterminé du procédé dans le procédé de charge à commander, ces divergences du cours normal du procédé sont signalées au système d'utilisation/observation et la possibilité d'une intervention manuelle consiste en la conduite du procédé par le personnel d'utilisation.
